## Europäisches Patentamt
## European Patent Office
## Office européen des brevets

(11) Veröffentlichungsnummer: **0 171 784**
**B1**

(12) **EUROPÄISCHE PATENTSCHRIFT**

(45) Veröffentlichungstag der Patentschrift:
31.05.89

(51) Int. Cl.⁴: **H 04 M 3/36,** H 04 Q 3/545,
H 04 Q 11/04

(21) Anmeldenummer: 85110105.5

(22) Anmeldetag: 12.08.85

(54) Schaltungsanordnung für Fernmeldeanlagen, insbesondere Fernsprechvermittlungsanlagen, mit informationsverarbeitenden zentralen und/oder dezentralen Schaltwerken.

(30) Priorität: 16.08.84 DE 3430172

(43) Veröffentlichungstag der Anmeldung:
19.02.86 Patentblatt 86/8

(45) Bekanntmachung des Hinweises auf die Patenterteilung:
31.05.89 Patentblatt 89/22

(84) Benannte Vertragsstaaten:
AT BE CH DE FR GB IT LI NL SE

(56) Entgegenhaltungen:
EP-A-0 070 502
EP-A-0 134 010
US-A-4 099 235

4th INTERNATIONAL CONFERENCE ON SOFTWARE ENGINEERING FOR TELECOMMUNICATION SWITCHING SYSTEMS, 20.-24. Juli 1981, Coventry, GB, Seiten 167-171, IEEE, New York, US; C. HARVEY et al.: "Controlling overloads in multiprocessor systems"
PATENTS ABSTRACTS OF JAPAN, Band 4, Nr. 87 (E-16) 569 , 21. Juni 1980, Seite 569 E 16; & JP - A - 55 52 692
PROCEEDINGS OF THE 17th ANNUAL ALLERTON CONFERENCE ON COMMUNICATION, CONTROL, AND COMPUTING, 10.-12. Oktober 1979, Monticello, Illinois, US, Seiten 47-53; F.L. VAN SCOY et al.: "Broadcasting a small number of

(73) Patentinhaber: Siemens Aktiengesellschaft Berlin und München, Wittelsbacherplatz 2, D-8000 München 2 (DE)

(72) Erfinder: Pohl, Siegfried, Dr. Ing. grad., Hirschplanallee 7, D-8042 Oberschleissheim (DE)

(56) Entgegenhaltungen: (Fortsetzung)
messages in a square grid graph"

LIBER, STOCKHOLM 1989

**Beschreibung**

Die Erfindung bezieht sich auf eine Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit einem zentralen Koppelfeld und mit dezentralen Anschlußgruppen, denen jeweils ein dezentrales Schaltwerk zugeordnet ist, und an die Teilnehmeranschlußleitungen, Verbindungsleitungen, zum Beispiel Orts- und Fernverbindungsleitungen, und verbindungsindividuelle Schalteinrichtungen, zum Beispiel Verbindungssätze und Wahlempfangseinrichtungen, angeschlossen sind, und die mit dem zentralen Schaltwerk in einem der Abwicklung der einzelnen Vermittlungsvorgänge dienenden Austausch von Daten, zum Beispiel von Wahlinformationen und Steuer- und Einstellinformationen, stehen, und mit Meßeinrichtungen zur Bestimmung eines Abweichens der akuten Informationsverarbeitungs-Arbeitsbelastung eines zentralen Schaltwerkes von seiner Leistungsfähigkeit, insbesondere zur Erkennung von Informationsverarbeitungs-Verkehrsüberlastungen und zur Abwehr solcher Überlastungen, und mit den dezentralen Anschlußgruppen zugeordneten Abweiseinrichtungen, in denen die Menge der einfallenden Informationsverarbeitungs-Aufträge reduziert wird, indem ein bestimmter Prozentsatz dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks zu den dezentralen Schaltwerken, in denen der Prozentsatz gespeichert ist und in denen für die Speicherung dieses Prozentsatzes vorgesehene Speicherschaltmittel bei Eintreffen von eine Erhöhung bzw. Herabsetzung meldenden Daten schrittweise den gespeicherten Prozentsatz verringern bzw. vergrößern, wobei die der Meldung der Erhöhung bzw. Herabsetzung dieses Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln übertragen werden, nach EP-A-134 010.

Bei einer Schaltungsanordnung gemäß EP-A-134 010 werden die einen Prozentsatz von in peripheren Schalteinrichtungen abzuweisenden Informationsverarbeitungs-Aufträgen meldenden Daten gemeinsam mit den der Abwicklung der Vermittlungsvorgänge dienenden und vom zentralen Schaltwerk zu den dezentralen Schaltwerken übertragenen Daten, insbesondere den Einstell- und Steuerinformationen, vom zentralen Schaltwerk zu den dezentralen Schaltwerken übermittelt. Sie werden in Speicherschaltmitteln in diesen Schaltwerken gespeichert und dienen zur Reduktion der Menge der jeweils einfallenden Informationsverarbeitungs-Aufträge, indem ein bestimmter Prozentsatz dieser Aufträge abgewiesen wird.

Die vom zentralen Schaltwerk zu den dezentralen Schaltwerken übertragenen und der Abwicklung der Vermittlungsvorgänge dienenden Daten werden als Nachrichten mit einem jeweils mehrere Bytes umfassenden Datenformat übertragen, das in der Regel umfangreicher ist als der für die jeweils zu übertragenden Daten tatsächlich bestehende Bedarf an Bits bzw. Bytes. In diesen Nachrichten für die Übertragung der der Abwicklung der Vermittlungsvorgänge dienenden Daten nicht benutzte Bits bzw. Bytes werden gemäß Hauptpatent für die der Meldung der momentanen Leistungsfähigkeit des zentralen Schaltwerkes dienenden Daten benutzt.

Wird in einer Schaltungsanordnung gemäß EP-A-134 010 eine Verbindung über zwei verbindungsindividuelle und/oder teilnehmerindividuelle Schalteinrichtungen hergestellt, die zwei verschiedenen dezentralen Schaltwerken zugeordnet sind, so werden die der Meldung der momentanen Leistungsfähigkeit des zentralen Schaltwerkes dienenden Daten in der angegebenen Weise im Zusammenhang mit zwei verschiedenen Nachrichtenübertragungsvorgängen vom zentralen Schaltwerk zu den betreffenden beiden dezentralen Schaltwerken übermittelt, indem die eine Nachricht, die die eine der beiden verbindungsindividuellen oder teilnehmerindividuellen Schalteinrichtungen betrifft, die die momentane Leistungsfähigkeit des zentralen Schaltwerkes angebenden Daten mit umfaßt und zu dem dieser Schalteinrichtung entsprechenden dezentralen Schaltwerk mitnimmt, und indem die andere Nachricht, die die andere der beiden verbindungsindividuellen oder teilnehmerindividuellen Schalteinrichtungen betrifft, ebenfalls diese Daten mit umfaßt und zu dem der jeweils anderen Schalteinrichtung entsprechenden anderen dezentralen Schaltwerk mitnimmt. - An dieser Stelle sei zur Klarstellung eingefügt, daß das Hauptpatent von Teilnehmeranschlußleitungen, Verbindungsleitungen und von verbindungsindividuellen Schalteinrichtungen spricht. Da alle diese Leitungen und Schalteinrichtungen verbindungsindividueller oder teilnehmerindividueller Art sind, werden diese Leitungen und Schalteinrichtungen hier zusammenfassend als teilnehmerindividuelle und/oder verbindungsindividuelle Schalteinrichtungen bezeichnet.

Es kann nun bei einer Schaltungsanordnung gemäß EP-A-134 010 das Problem auftreten, daß bei der Übertragung der der Abwicklung der Vermittlungsvorgänge dienenden Daten in den betreffenden Nachrichten wegen des gegebenen und hierfür verwendeten Datenformates nicht immer ausreichend Platz ist, der für die Übertragung dieser Daten unbenutzt bleibt und deshalb zur Übermittlung der die momentane Leistungsfähigkeit des zentralen Schaltwerkes betreffenden Daten verwendet werden kann. Unter diesem Gesichtspunkt besteht deshalb für die Erfindung die Aufgabe, für die Übermittlung der zuletzt genannten Daten erforderlichenfalls auch andere Möglichkeiten für die Übermittlung dieser Daten bereitzustellen.

Ferner besteht ganz allgemein das Problem, daß die die momentane Leistungsfähigkeit des zentralen Schaltwerkes betreffenden Daten so schnell wie möglich zu den dezentraien Schaltwerken hin übermittelt werden müssen. Bei Herstellung einer Verbindung über zwei verschiedenen dezentralen Schaltwerken zugeordnete verbindungsindividuelle und/oder teilnehmerindividuelle Schalteinrichtungen kann es vorkommen, daß die der Abwicklung der Vermittlungsvorgänge dienenden Daten nicht sofort zu diesen beiden dezentralen Schaltwerken hin übertragen werden müssen, sondern zu dem einen der beiden Schaltwerke erst zu einem etwas späteren Zeitpunkt. Das kann zur Folge haben, daß einem dieser dezentralen Schaltwerke die die momentane Verkehrsbelastung des zentralen Schaltwerkes betreffenden Daten zu diesem dezentralen Schaltwerk erst verspätet übertragen werden. Unter diesem Gesichtspunkt besteht deshalb für die Erfindung die Aufgabe, die Übermittlung der die momentane Verkehrsbelastung des zentralen Schaltwerkes betreffenden Daten so schnell wie möglich zu allen dezentralen Schaltwerken hin zu verbreiten.

Darüber hinaus stellt die Unterbringung der die momentane Verkehrsbelastung des zentralen Schaltwerkes betreffenden Daten in den Nachrichten, die zur Übertragung der die Abwicklung der Verbindungsherstellung betreffenden Daten dienen, einen gewissen Aufwand für das zentrale Schaltwerk zur Abwicklung entsprechender Funktionsabläufe dar. Unter diesem Gesichtspunkt besteht für die Erfindung die weitere Aufgabe, das zentrale Schaltwerk zu entlasten und möglichst viel Arbeitsbelastung von ihm auf die dezentralen Schaltwerke abzuwälzen.

Schließlich kann bei einem dezentralen Schaltwerk, dem nur relativ wenige ankommend belegbare verbindungsindividuelle Schalteinrichtungen, und zwar überwiegend oder nur solche mit niedriger Dringlichkeitsstufe (bei denen der Abweisungs-Effekt sich also besonders intensiv auswirkt, indem ein gespeicherter Prozentsatz abzuweisender Informationsverarbeitungs-Aufträge dazu führt, daß ein solches Schaltwerk keine Informationsverarbeitungs-Aufträge an das zentrale Schaltwerk abgibt und folglich auch keine Steuer- und Einstellbefehle von ihm erhält und folglich auch keine der Meldung der momentanen Verkehrsbelastung des zentralen Schaltwerkes dienenden Daten erhält) zugeordnet sind, das Problem auftreten, daß nach Speicherung eines relativ hohen Prozentsatzes hinsichtlich des Anteiles von abzuweisenden Informationsverarbeitungs-Aufträgen dieses dezentrale Schaltwerk Informationsverarbeitungs-Aufträge nur noch abweist und wegen Fehlen der Datenaustauschvorgänge mit dem zentralen Schaltwerk überhaupt nicht mehr darüber informiert wird, daß und wann das zentrale Schaltwerk die gewesene Überlastsituation überwunden hat und demgemäß ein Abweisen weiterer Informationsverarbeitungs-Aufträge zu unterbleiben hat. Unter diesem Gesichtspunkt besteht für die Erfindung die Aufgabe, bei Herabsetzung des Prozentsatzes abzuweisender Informationsverarbeitungs-Aufträge die dies betreffenden Meldungen mit größerer Sicherheit vom zentralen Schaltwerk zu allen dezentralen Schaltwerken hin zu bringen.

Durch die Erfindung soll die Schaltungsanordnung gemäß EP-A-134 010 dahingehend ausgestaltet und weitergebildet werden, daß wenigstens eine der zuvor erläuterten Aufgaben gelöst wird. Dies wird erfindungsgemäß dadurch erreicht, daß die der Meldung der Veränderung des Prozentsatzes dienenden und jeweils vom zentralen Schaltwerk zu einem dezentralen Schaltwerk übertragenen Daten bei Herstellung von Verbindungen über das Koppelfeld und über zwei der verbindungsindividuellen Schalteinrichtungen, die an verschiedene Anschlußgruppen angeschlossen sind, zusammen mit verbindungsindividuell und von verbindungsindividueller Schalteinrichtung zu verbindungsindividueller Schalteinrichtung zu übertragenden Schaltkennzeichen-Informationen, insbesondere Transit-Informationen, weitergeleitet und dadurch von dem letztgenannten dezentralen Schaltwerk zu den anderen dezentralen Schaltwerken übermittelt werden.

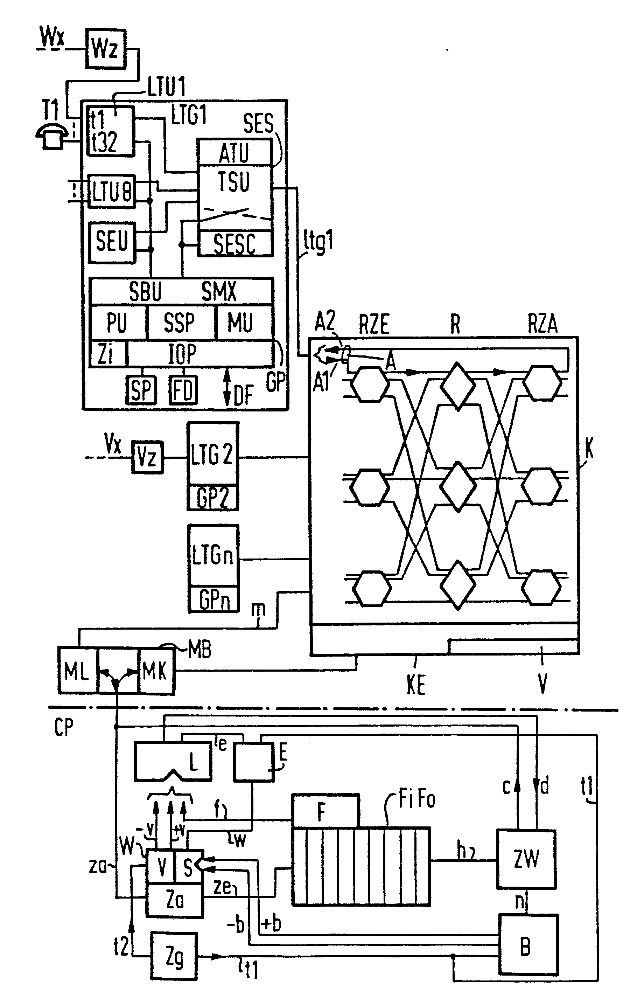

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, zum Beispiel A des Koppelfeldteiles K, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/1980, Heft 10, Seiten 646 bis 652, und 1978 International Zurich Seminar on Digital Communications, Proccedings IEE Catalogue, Nr. 78 CH 1325-0 ASST, Seiten B2-1, A4.1, auch die deutschen Patentanmeldungen P 3 100 511.9 / VPA 81 P 6201; P 3 104 002.0 / VPA 81 P 6203 und P 3 106 903.7 / VPA 81 P 6209).

In der Zeichnung ist unter anderem die Anschlußgruppe LTG1 gezeigt. Deren Aufbau und Arbeitsweise sind ausführlich in der DE-A-2 826 113 ab Seite 6 unten beschrieben. Ferner sei auf das Beiheft zum 4. Jahrgang (1981) der Zeitschrift "telcom report" hingewiesen. Die weiteren Erläuterungen setzen diese Beschreibung als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betrepfenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegesucheinrichtung nebst Belegungsspeicher ausübt, erarbeitet und zur Koppelfeldeinstelleinrichtung KE des Koppelfeldes Kübertragen. Der die Vermittlungsdaten übertragende Datenfluß vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist zum Beispiel in der DE-B-1 537 849 (VPA 67/3047) ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-A-2 826 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, zum Beispiel der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der anschlußgruppen LTG1 bis LTGn mit Hilfe des Koppelfeldes K durchgeschaltet sein müssen, bevor der Aufbau von Nachrichtenverbindungen, zum Beispiel Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V Einstelldaten, d. h. also die Vermittlungsdaten, für die Datenkanäle gespeichert enthält. Diese Vermittlungsdaten brauchen also bei einem Neuaufbau der Datenverbindung nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlußgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Wie in der bereits genannten DE-A-2 826 113 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, zum Beispiel LTG1, zugeordneten dezentralen Steuereinrichtungen, zum Beispiel GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten DE-A-2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze, Gebührenzählimpulsgeber (ZIG) u.dgl. sind teilnehmerindividuelle und/oder verbindungsindividuelle Schalteinrichtungen.

Das Gruppensteuerwerk nun dient in an sich bekannter Weise zur Abwicklung der Aufnahme der zuvor erwähnten eintreffenden verbindungsindividuellen Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speicher SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld K hin als auch von diesem abgehend zu einer solchen Leitung durchgeschaltet. Bei einer Verbindungsherstellung erfolgt zunächst eine Durchschaltung zum Beispiel von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlußgruppe (gegebenenfalls dieselbe Anschlußgruppe, in der Regel aber eine andere Anschlußgruppe), wozu das betreffende Gruppensteuerwerk der jeweiligen Anschlußgruppe tätig werden muß, bzw. die betreffenden Gruppensteuerwerke der jeweiligen Anschlußgruppen tätig werden müssen.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits.

Die im Zusammenhang dieser jeweils pro Verbindung erforderlichen Durchschaltvorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Inanspruchnahme des Gruppensteuerwerks zwangsläufig verbundene Informationsverarbeitungs-Verkehrsbelastung pro Durchschaltevorgang - wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben. Die pro Verbindungsherstellung von einem Gruppensteuerwerk an das zentrale Steuerwerk zu übertragenden Informationen sind im wesentlichen Einstell- und Steuerinformationen.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe zum Beispiel der Schleifenanschluß, der das Anrufsignal darstellt. Ein solches Initial-Schaltkennzeichen ist bei einer Verbindungsleitung zum Beispiel das c-Ader-Belegungssignal bei ankommender Belegung. Entsprechendes gilt für verbindungsindividuelle Kanäle.

Die genannten Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Das bereits erwähnte Zentralsteuerwerk ZW ist ein zentrales informationsverarbeitendes Schaltwerk. Die dezentralen Steuereinrichtungen GP1 bis GPn sind teilzentrale informationsverarbeitende Schaltwerke. Wie bereits erläutert wurde, findet der Datenaustausch zwischen den teilzentralen Schaltwerken GP1 bis GPn einerseits und dem zentralen Schaltwerk ZW andererseits über die Pufferspeicher MB statt. Informationen, die zum zentralen Schaltwerk hin zu übertragen sind, werden über die Leitungen za, ze und h weitergegeben. Informationen, die vom zentralen Schaltwerk ZW zu den teilzentralen Schaltwerken GP1 bis GPn abgegeben werden, werden über den Weg c übertragen.

Wie bereits erwähnt wurde, und wie ganz allgemein bekannt, weist das zentrale Schaltwerk hinsichtlich seiner Informations-Verarbeitungskapazität eine begrenzte Leistungsfähigkeit auf. Diese Leistungsfähigkeit betrifft die Anzahl von Informationsverarbeitungsvorgängen, die pro Zeiteinheit abgewickelt werden können. Die Belastbarkeit eines jeden zentralen Schaltwerkes hängt grundsätzlich von seinem Aufbau (Struktur und Programmabwicklung) und von der Art und dem Umfang der ihm laufend übertragenen Informationsverarbeitungsvorgänge ab. Diese sind in der Regel von unterschiedlicher Art. Sie treten gemischt auf; die Belastbarkeit betrifft deshalb die jeweils gegebene Mischung von Informationsverarbeitungsaufträgen.

Die Erfahrung lehrt nun, daß die Zusammensetzung von Informationsverarbeitungsvorgängen verschiedener Art sich während des Betriebes eines zentralen Schaltwerkes verschieben kann. So kann es zum Beispiel sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. Darüber hinaus kann der Anteil von jeweils vor vollständiger Verbindungsherstellung abgebrochenen Verbindungsherstellungsversuchen an der Gesamtheit der Verbindungsherstellungsvorgänge zu bestimmten Tageszeiten größer sein als zu bestimmten anderen Tageszeiten.

Aus den verschiedenen zuvor angegebenen Gründen ist die Belastbarkeit eines zentralen Schaltwerks nicht konstant. Um ein zentrales Schaltwerk optimal auszulasten, ist es deshalb zweckmäßig, die zu den verschiedenen Betriebszeiten aufgrund der unterschiedlichen Voraussetzungen gegebenen unterschiedlichen Belastbarkeiten zu berücksichtigen. Deshalb ist es gebräuchlich, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, wobei also Kurzzeitschwankungen nicht zum Tragen kommen.

Eine dem zuvor angegebenen Zweck dienende Meßeinrichtung kann z. B. auf der Basis arbeiten, daß ein zentrales Steuerwerk nach jeweils erfolgter Abarbeitung sämtlicher vorliegender Informationsverarbeitungsaufträge ein Anforderungssignal erzeugt, das u.a. dieser Meßeinrichtung zugeführt wird. Diese Meßeinrichtung zählt nun über bestimmte Zeiträume gleicher Größe hinweg, zum Beispiel über vier Sekunden hinweg, die Anzahl solcher aufgetretener Anforderungssignale im zentralen Schaltwerk. In der Zeichnung ist eine dem zentralen Schaltwerk ZW zugeordnete und mit ihm über eine Leitung n verbundene Meßeinrichtung B dargestellt. Vom zentralen Schaltwerk erhält sie also über diese Leitung n das Anforderungssignal bei seinem jedesmaligen Auftreten. Die Meßeinrichtung B zählt in an sich bekannter Weise die Anforderungssignale ab. Von einer zentralen Zeitgebereinrichtung Zg erhält sie im Abstand von 4 Sekunden ein Zeitmarkierungssignal über die Leitung t1. Dieses Zeitmarkierungssignal bedeutet für einen Meßzeitraum das Ende und zugleich den Beginn für den jeweils nächstfolgenden Meßzeitraum. Die Meßeinrichtung B ermittelt nun die Anzahl der zwischen zwei solchen Zeitmarkierungen eintreffenden Anforderungssignale des jeweiligen zentralen Schaltwerks. Liegen längere Zeit keine Informationsverarbeitungsaufträge vor, so werden diese Anforderungssignale in Zeitabständen abgegeben, die jeweils einem Informationsverarbeitungsvorgang im Mittel entsprechen. Es ist auch möglich, anstelle von oder zusätzlich zu diesen Anforderungssignalen drittrangige Informationsverarbeitungsvorgänge vom zentralen Schaltwerk ZW zur Meßeinrichtung B hin zu melden, also diese drittrangigen Informationsverarbeitungsvorgänge einer Ermittlung der Belastbarkeit zugrunde zu legen. Solche drittrangigen Informationsverarbeitungsvorgänge können zum Beispiel interne Prüfroutine-Programmabläufe oder dergleichen sein.

Die Meßeinrichtung B zählt also jeweils innerhalb eines Meßzeitraumes die erhaltenen Anforderungssignale. Der in ihr gespeicherte Belastbarkeitsnormalwert gibt die Anzahl von Informationsverarbeitungsvorgängen an, die - langfristig gesehen - von einem zentralen Schaltwerk der jeweiligen Art abgewickelt werden. Dieser Belastbarkeitsnormalwert ist ein empirisch und/oder rechnerisch ermittelter Konstantwert, der in der Meßeinrichtung B permanent gespeichert ist. Die Meßeinrichtung B subtrahiert nun von diesem Belastbarkeitsnormalwert die Anzahl der pro Meßzeitraum erhaltenen Anforderungssignale und dividiert die sich hierbei ergebende Differenz wiederum durch den Belastbarkeitsnormalwert. Ergibt sich hierbei der Wert 1, so ist hieran erkennbar, daß das zentrale Schaltwerk ZW in dem jeweiligen Meßzeitraum pausenlos mit Informationsverarbeitungsvorgängen beschäftigt war. Darin liegt ein Indiz dafür, daß das zentrale Schaltwerk in dem betreffenden Meßzeitraum zu hoch belastet war. Das zentrale Schaltwerk soll im allgemeinen nur zu 95 % ausgelastet sein. Ergibt der erwähnte Divisionsvorgang den Wert von 0,95, so ergibt sich daraus, daß das zentrale Schaltwerk in der erwünschten Weise zu 95 % ausgelastet war. Ergibt sich jedoch ein niedrigerer Wert, zum Beispiel von 0,93, so ist hieran erkennbar, daß das zentrale Schaltwerk nur zu 93 % in dem betreffenden Meßzeitraum ausgelastet war, also zu niedrig.

Je nach dem erhaltenen Ergebnis aus dem betreffenden Divisionsvorgang pro Meßzeitraum gibt die Meßeinrichtung B entweder überhaupt kein Signal zu einem Belastungszähler W hin ab, oder sie gibt bei zu niedriger - bzw. zu hoher - Belastung des zentralen Schaltwerks (wenn also die Soll-Belastbarkeit von 95 % höher - bzw. niedriger - als die zur Zeit tatsächlich vorliegende Belastung des zentralen Schaltwerks ist), ein Steigerungssignal über den Weg +b - bzw. ein Minderungssignal über den Weg -b.

Die Meßeinrichtung B liefert also einen Belastbarkeitswert, wobei Belastungsschwankungen im Sekundenbereich nicht erfaßt, sondern vielmehr nivelliert werden. Diese Belastbarkeitsmessung erfaßt lediglich die Schwankungen der Belastbarkeit, die sich relativ geringfügig und aus der tageszeitlich sich ändernden Betriebssituation ergibt.

Wie zuvor ausgeführt wurde, wird das Steigerungssignal - bzw. das Minderungssignal - von der Meßeinrichtung B dem Belastungszähler W zugeführt. Diesen Belastungszähler durchlaufen sämtliche Informationsverarbeitungsaufträge, die über die Leitung za eintreffen und über die Leitung ze weitergegeben werden. Bei diesen Informationsverarbeitungsaufträgen handelt es sich teilweise um Initialaufträge und teilweise um Nachfolgeaufträge. Die zur Herstellung einer Verbindung von einem rufenden Teilnehmer abgegebenen Schaltkennzeichen bestehen aus einem Initial-Schaltkennzeichen an erster Stelle (Anrufsignal) und aus Nachfolge-Schaltkennzeichen, die in Zeitabständen, die durch die Art und Weise des jeweils rufenden Teilnehmers bedingt sind, eintreffen. Im Zusammenhang mit jeweils einer Verbindungsherstellung gehören also immer ein Initial-Schaltkennzeichen und eine Anzahl von Nachfolge-Schaltkennzeichen zusammen. Nachfolge-Schaltkennzeichen können darüber hinaus jeweils im Zusammenhang mit einer Verbindungsherstellung das Wahlendekennzeichen, das Meldekennzeichen, das Endekennzeichen und dergleichen sein, also Leitungskennzeichen, sowie · Gebührenzählimpulse. Diese Schaltkennzeichen werden mit Hilfe eines dezentralen Schaltwerks (teilzentrales Schaltwerk) GP aufgenommen; aus ihnen ergeben sich Informationsverarbeitungsaufträge, die gemäß der Unterscheidung der Schaltkennzeichen in Initial-Schaltkennzeichen und Nachfolge-Schaltkennzeichen ebenfalls zu unterscheiden sind, und zwar in Initialaufträge und Nachfolgeaufträge.

Über die Leitung za treffen nun sukzessive nacheinander Informationsverarbeitungsaufträge ein. Diese bestehen zu einem kleineren Teil aus Initialaufträgen und zu einem größeren Teil aus Nachfolgeaufträgen. Diese Informationsverarbeitungsaufträge treffen bezüglich der verschiedenen Verbindungsherstellungsvorgänge ungeordnet, d.h. also gemischt ein. Sie durchlaufen den Belastungszähler W und werden in einem FiFo-Speicher gespeichert. Dieser FiFo-Speicher weist in bekannter Weise eine größere Anzahl von Speichereinheiten auf, wobei jeweils eine Speichereinheit zur Speicherung eines Informationsverarbeitungsauftrages dient. In der gleichen Reihenfolge, wie die Informationsverarbeitungsaufträge über die Leitung ze zum FiFo-Speicher gegeben werden, werden sie auf Abruf durch das zentrale Schaltwerk ZW über die Leitung h vom FiFo-Speicher zu diesem zentralen Schaltwerk weitergegeben.

Der Belastungszähler W dient nun als eine weitere Meßeinrichtung zur Bestimmung eines Abweichens der akuten Informationsverarbeitungs-Arbeitsbelastung des zentralen Schaltwerks von seiner Leistungsfähigkeit. Der Belastungszähler W, der von sämtlichen Informationsverarbeitungsaufträgen durchlaufen wird, zählt von diesen lediglich die Initialaufträge.

Für die zuletzt erwähnte Zählung bestehen zwei Möglichkeiten. Die eine Möglichkeit besteht darin, daß eine zum Beispiel jede Sekunde über die Leitung t2 zum Belastungszähler übertragene Zeitmarkierung in dem Belastungszähler W jeweils einen Zählvorgang startet bzw. stoppt, und daß ein zwischen je zwei Zeitmarkierungen gewonnenes Zählergebnis mit einem Vergleichswert verglichen wird. Die andere Möglichkeit besteht darin, daß ein Zähler durch die Initialaufträge vorwärtsgeschaltet wird und in gleichmäßigen Zeitabständen unabhängig von den Initialaufträgen rückwärtsgeschaltet wird, und daß ein Vergleichswert in der Anzahl von Rückwärtsschaltvorgängen besteht, die jeweils zwischen zwei in gleicher Weise wie in den zuvor angegebenen Zeitmarkierungen ausgeführt werden.

Es ist also für Initialaufträge (Initial-Schaltkennzeichen) und Nachfolgeaufträge (Nachfolge-Schaltkennzeichen) ein gemeinsamer FiFo-Speicher vorgesehen; der Belastungszähler W selektiert von den dem FiFo-Speicher zugeführten Informationsverarbeitungsaufträgen (Schaltkennzeichen) die Initialaufträge, um den Zählvorgang nur auf diese zu beschränken. Wie ausgeführt, führt der Belastungszähler W die Zählung in aufeinanderfolgenden Zählzeitintervallen durch, die durch die genannten Zeitmarkierungen begrenzt sind; er wird jeweils nach Ablauf eines Zählzeitintervalles durch die Zeitmarkierung in seiner Ausgangsposition zurückgestellt und liefert ein am Ende eines jeden Zählzeitinterv alles mit einem Vergleichswert zu vergleichendes Zählergebnis. Dieser Vergleichswert stellt einen Schwellenwert dar. Die andere Möglichkeit besteht darin, daß der Belastungszähler W durch die Initialaufträge vorwärtsgeschaltet und kontinuierlich schrittweise zurückgestellt wird. In diesem Falle hält der Belastungszähler also jederzeit ein Zählergebnis bereit, das einem andauernden, wenigstens aber einmal pro Vorwärtszählvorgang und/oder pro Rückstellvorgang anhand eines Schwellenwertes durchgeführten Vergleichsvorgang unterworfen

wird. - In beiden Fällen der speziellen Ausbildung des Belastungszählers W wird aufgrund einer Überschreitung des Schwellenwertes die Zufuhr von Initialaufträgen (Initial-Schaltkennzeichen) zum FiFo-Speicher gedrosselt, wodurch eine Annahme aller auch jeweils zu einem Initialauftrag (Initial-Schaltkennzeichen) gehörenden Nachfolgeaufträge (Nachfolge-Schaltkennzeichen) verhindert ist. Um dies nun zu bewerkstelligen, ist eine Restriktionseinrichtung L vorgesehen. Überschreitet in dem Belastungszähler W der Zählwert den Schwellenwert, also den Vergleichswert, so gibt der Belastungszähler W ein Minderungssignal über die Leitung -v zur Restriktionseinrichtung L. Ist die Überschreitung des Schwellenwertes durch den Zählwert wieder behoben, so gibt der Belastungszähler W ein Steigerungssignal +v zur Restriktionseinrichtung L hin ab. Die Abgabe eines Miderungssignales oder Steigerungssignales vom Belastungszähler W zur Restriktionseinrichtung L erfolgt in gleichmäßigen Zeitabständen von zum Beispiel 1 Sekunde.

Die Restriktionseinrichtung L dient nun dazu, in den Anschlußgruppen LTG1 bis LTGn zu bewirken, daß hier ein bestimmter Prozentsatz von Verbindungsherstellungsversuchen abgewiesen wird. Dadurch soll die Menge der einfallenden Informationsverarbeitungsaufträge reduziert werden. Hierzu ist in jedem der dezentralen Schaltwerke GP ein Speicher Zi vorgesehen, in dem der Prozentsatz von Anrufsignalen gespeichert ist, die bei einer Erkennung von Informationsverarbeitungs-Verkehrsüberlastungen zur Abwehr solcher Überlastungen abgewiesen werden sollen. In diesem Speicher sind zum Beispiel die Prozentsätze 0 %, 25 %, 33,3 %, 50 % und 75 % speicherbar. Diese Prozentsätze geben an, welcher Anteil der eintreffenden Anrufsignale abzuweisen ist. Unter Abweisung ist zu verstehen, daß bei Eintreffen eines Anrufsignales an den betreffenden Teilnehmer Besetztsignal ausgesendet wird, und daß verhindert wird, daß von ihm abgegebene Wahlkennzeichen aufgenommen, bzw. in Form von Nachfolgeschaltkennzeichen weitergeleitet werden. Ebensogut ist es auch möglich, anstelle eines Prozentsatzes für abzuweisende Anrufsignale auch einen Prozentsatz für anzunehmende Anrufsignale, also eine "Durchlaßquote" zu speichern. - Die Abweisung von Anrufsignalen mittels einer Abweiseinrichtung kann nach dem Abzählprinzip erfolgen, wobei also ein jeweils rufender Teilnehmer zufällig Erfolg oder Mißerfolg haben kann mit seinem Verbindungsherstellungsversuch, oder es kann auch unterschieden werden zwischen Anrufen oder Teilnehmern verschiedener Prioritätsklassen.

Daten über den jeweiligen Prozentsatz von abzuweisenden bzw. durchzulassenden Initialaufträgen werden von der Restriktionseinrichtung L zu den dezentralen Schaltwerken GP übertragen und in ihnen gespeichert. Eine solche Übertragung dieser Daten findet entweder laufend statt oder immer nur dann, wenn eine Erhöhung oder Herabsetzung dieses Prozentsatzes zu melden ist. Die in den dezentralen Schaltwerken durch die Speicherung des Prozentsatzes vorgesehenen Speicherschaltmittel Zi verringern bzw. vergrößern den gespeicherten Prozentsatz immer bei Eintreffen von eine Erhöhung bzw. eine Herabsetzung meldenden Daten schrittweise.

Es ist nun vorgesehen, daß die der Meldung der Erhöhung bzw. Herabsetzung des Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln Zi übertragen werden. Hierzu ist die Restriktionseinrichtung L mit dem zentralen Schaltwerk über die Leitung d verbunden. Sie meldet über diesen Weg Daten bezüglich des geltenden Prozentsatzes. Das zentrale Schaltwerk ZW gibt diese Daten, die jeweils Daten relativ geringen Informationsinhaltes sind, den der Abwicklung der Vermittlungsvorgänge dienenden Einstell- und Steuerinformationen bei, die also vom zentralen Schaltwerk zu den dezentralen Schaltwerken laufend übertragen werden. Es ist also nicht erforderlich, daß für die Übertragung der den jeweiligen Prozentsatz betreffenden Daten eigene Nachrichten-Transaktionen gestartet werden müssen, sondern diese Daten werden den Einstell- und Steuerinformationen für die Verbindungsherstellung beigegeben. Da der Datenaustausch mit den verschiedenen Anschlußgruppen unterschiedlich intensiv ist, werden die den jeweiligen Prozentsatz meldenden Daten also besonders schnell zu denjenigen dezentralen Schaltwerken hin transportiert, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase gleich starker Lastabwehr nicht erforderlich, Daten hierüber vom zentralen Steuerwerk zu den dezentralen Steuerwerken zu übertragen, die die Informationsverarbeitungs-Verkehrsüberlastung betreffen. Treten Informationsverarbeitungs-Verkehrsüberlastungen von einer Anschlußgruppe her auf, so werden die betreffenden Restriktionsdaten zuerst zu dieser hin gemeldet.

Die Informationsverarbeitungsaufträge (Schaltkennzeichen) treffen in ihrer jeweiligen zeitlichen Folge also gemischt hinsichtlich verschiedener Serien (eine Serie entspricht immer einem Verbindungsherstellungsvorgang) aufeinanderfolgend ein; sie zeigen ihre jeweilige Serienzugehörigkeit durch eine jedem Schaltkennzeichen beigegebene Ursprungsadresse an. Diese Ursprungsadresse gibt die jeweilige Zuordnung zu der Teilnehmeranschlußschaltung eines rufenden Teilnehmers oder einem Verbindungssatz oder einer Leitungsabschlußschaltung oder dergleichen, also zu einer der genannten verbindungsindividuellen Schalteinrichtungen an.

Es ist vorgesehen, daß nach einer erfolgten Abwehr einer Informationsverarbeitungs-Verkehrsüberlastung bei einer Abnahme derselben und einem dabei stattfindenden ununterbrochenen Unterschreiten einer Belastungsdegressionsgrenze durch den Momentanwert der akuten Informations-Verkehrsbelastung nach Ablauf einer bestimmten Mindest-Karenzzeit, zum Beispiel von 12 Sekunden, während der für das für die Belastbarkeit maßgebende Bestimmungsergebnis aufgrund des Rückganges der Belastung stets höhere Werte ermittelt werden, die Erzeugung und/oder Weitergabe und/oder Auswertung des Bestimmungsergebnisses: letztere durch Vergleich des Zählergebnisses mit dem Bestimmungsergebnis - unterbrochen wird. Hierzu ist eine Indikationseinrichtung E vorgesehen. Diese ist über eine Leitung e mit dem Ausgang der Restriktionseinrichtung L verbunden; ferner ist sie über die Leitung t1 mit der Zeitgebereinrichtung Zg verbunden.

Wenn ununterbrochen eine längere Zeit, zum Beispiel von 12 Sekunden, keine Informationsverarbeitungs-Verkehrsüberlastung vorgelegen hat, also die Belastungsdegressionsgrenze auch so lange ununterbrochen unterschritten ist, was sich daran zeigt, daß es für diese Zeit keine Restriktion gegeben hat, wird die Belastbarkeitsmessung deaktiviert. Dies kann in der Weise geschehen, daß die Auswertung des Bestimmungsergebnisses gestoppt wird. Hierzu ist die Leitung w zwischen der Indikationseinrichtung E und dem Belastungszähler W vorgesehen. Zur Deaktivierung der Auswertung des Bestimmungsergebnisses wird ein entsprechendes Signal von der Indikationseinrichtung E zum Belastungszähler W gegeben.

Nachdem die bisherige Beschreibung die erfindungsgemäß gestaltete Zeitmultiplex-Fernsprechvermittlungsanlage grundlegend in allgemeineren Zusammenhängen beschrieben hat, wendet sie sich nunmehr den erfindungsgemäßen Zusammenhängen zu.

In den dezentralen Schaltwerken befinden sich also Abweiseinrichtungen, zu denen u.a. jeweils der Speicher Zi gehört, in dem der Prozentsatz von Anrufsignalen gespeichert ist, die bei einer Erkennung von Informationsverarbeitungs-Verkehrsüberlastungen zur Abwehr solcher Überlastungen abgewiesen werden. Eine Abweisung besteht darin, daß bei Eintreffen eines Initialschaltkennzeich von einer verbindungsindividuellen Schalteinrichtung, zum Beispiel Teilnehmer-Anschlußschaltung ein Signal an dieses zurückgegeben wird, welches veranlaßt, daß in der betr. Teilnehmer-Anschlußschaltung Besetztton für den jeweils rufenden Teilnehmer eingeschaltet wird, und daß eine Weitergabe weiterer Schaltkennzeichen, zum Beispiel Wahlziffern, von ihm über das dezentrale Schaltwerk an das zentrale Schaltwerk unterbunden wird. Da sämtliche Informationsverarbeitungsaufträge aufgrund von von den rufenden Teilnehmern abgegebenen Wahlkennzeichen sowie aufgrund von anderen Schaltkennzeichen jeweils die Ursprungsadresse tragen, die die betreffende verbindungsindividuelle oder teilnehmerindividuelle Schalteinrichtung bezeichnet, kann auch vorgesehen werden, daß sämtliche Wahlkennzeichen und Schaltkennzeichen zunächst von den verbindungsindividuellen und teilnehmerindividuellen Schalteinrichtungen aufgenommen und vom betreffenden dezentralen Schaltwerk übernommen werden, und daß diese die Abweisung von Initialschaltkennzeichen einschließlich der jeweils zur gleichen Serie gehörenden Nachfolgeschaltkennzeichen durchführt.

Wird nun eine Verbindung zum Beispiel von der Teilnehmerstation T1 in der weiter oben beschriebenen Weise über das Koppelfeld K zu einer Leitungsabschlußschaltung Vz einer abgehend belegten Verbindungsleitung Vx hergestellt, so gibt das zentrale Steuerwerk ZW entsprechende Einstell- und Steuerbefehle für den Aufbau und die Durchschaltung dieser Verbindung an die dezentralen Schaltwerke GP und GP2 ab. Zusammen mit den an das dezentrale Schaltwerk GP vom zentralen Schaltwerk ZW übertragenen Einstell- und Steuerbefehlen (Einstell- und Steuerinformationen), überträgt das zentrale Schaltwerk ZW Daten zur Meldung eines Abweichens der akuten Informationsverarbeitungs-Arbeitsbelastung des zentralen Schaltwerks bezüglich seiner tatsächlichen Leistungsfähigkeit. Diese Daten speichert das dezentrale Schaltwerk GP in seinem Speicher Zi. Zur Speicherung des jeweiligen Prozentsatzes von abzuweisenden Initialschaltkennzeichen verringern bzw. vergrößern die die Erhöhung bzw. Herabsetzung des betreffenden Prozentsatzes meldenden Daten schrittweise den im Speicher Zi gespeicherten Prozentsatz. Die der Meldung der Erhöhung bzw. Herabsetzung der Leistungsfähigkeit dienenden Daten werden in der angegebenen Weise gemeinsam mit den der Abwicklung der Vermittlungsvorgänge vom zentralen Schaltwerk zu dem dezentralen Schaltwerk übertragenen Daten, also den Einstell- und Steuerinformationen, vom zentralen Schaltwerk zu den dezentralen Schaltwerken und in diesen zu den Speicherschaltmitteln (Zi) übertragen.

Es ist vorgesehen, daß nicht nur vom zentralen Schaltwerk zu dem dezentralen Schaltwerk Einstell- und Steuerbefehle übertragen werden, sondern daß auch bei Herstellung von Verbindungen, zum Beispiel zwischen der Teilnehmerstation T1 und der Verbindungsleitung Vx, über das Koppelfeld K Schaltkennzeichen von der betreffenden teilnehmerindividuellen Schalteinrichtung (Teilnehmeranschlußschaltung) zu der betreffenden verbindungsindividuellen Schalteinrichtung (Leitungsabschlußschaltung) übertragen werden. Diese Schaltkennzeichen werden auch als "Transit-Schaltkennzeichen" bezeichnet. Hierbei handelt es sich in der Hauptsache um Wahlkennzeichen, die den vom jeweils rufenden Teilnehmer gewählten Ziffern entsprechen und die über die abgehend belegte Verbindungsleitung, zum Beispiel Vx, zur Aussendung gebracht werden müssen. Bei diesem Transit-Schaltkennzeichen kann es sich auch um solche zur Übertragung von Gebührenzählinformationen und anderen, in Zusammenhang mit der Verbindungsherstellung und -durchschaltung erforderliche Informationen handeln. Diese Informationen werden bei einer Verbindungsherstellung immer von einer verbindungsindividuellen bzw. teilnehmerindividuellen Schalteinrichtung zu einer anderen verbindungsindividuellen bzw. teilnehmerindividuellen Schalteinrichtung übertragen, wobei diese beiden Schalteinrichtungen in der Regel zwei verschiedenen Anschlußgruppen angehören. In EP-A-70 502 und EP-A-66 654 wird im einzelnen beschrieben, von welcher Art Transit-Schaltkennzeichen sein können und auf welche Weise diese von verbindungsindividueller bzw. teilnehmerindividueller Schalteinrichtung zu verbindungsindividueller bzw. teilnehmerindividueller Schalteinrichtung übertragen werden.

Wie weiter oben beschrieben, werden zusammen Einstell- und Steuerinformationen, die vom zentralen Schaltwerk ZW für die Herstellung und Durchschaltung von Verbindungen über teilnehmerindividuelle bzw. verbindungsindividuelle Schalteinrichtungen zu dezentralen Schaltwerken hin übertragen werden, zugleich die die Leistungsfähigkeit des zentralen Schaltwerks betreffenden Daten vom zentralen Schaltwerk zum jeweiligen dezentralen Schaltwerk übermittelt. Bei einer Verbindung über zwei verbindungsindividuelle bzw. teilnehmerindividuelle Schalteinrichtungen können die betreffenden Einstell- und Steuerinformationen zu verschiedenen Zeitpunkten übertragen werden. Das bedeutet, daß eine der beiden Schalteinrichtungen, die die Leistungsfähigkeit des zentralen Schaltwerks betreffenden Daten wesentlich früher erhält als die andere der beiden Schalteinrichtungen Ferner kann es sein, daß aufgrund der Verwendung eines bestimmten Datenformates mit einer bestimmten Anzahl von übertragbaren Bytes nur in einer der beiden Nachrichten noch Bytes oder Bits frei sind zur Unterbringung der die Leistungsfähigkeit des zentralen Schaltwerks betreffenden Daten, daß also bei Herstellung und Durchschaltung einer Verbindung diese Daten nur zu einem der beiden betroffenen dezentralen Schaltwerke übermittelt werden können.

Es ist nun vorgesehen, daß zusammen mit verbindungsindividuell und von verbindungsindividueller bzw. teilnehmerindividueller Schalteinrichtung zu verbindungsindividueller bzw. teilnehmerindividueller Schalteinrichtung zu übertragenden Schaltkennzeichen-Informationen auch die die Leistungsfähigkeit des zentralen Schaltwerks betreffenden Daten von dem einen dezentralen Schaltwerk zu dem anderen dezentralen Schaltwerk weitergeleitet werden. Bei jeder Verbindungsherstellung oder Verbindungsdurchschaltung, bei der also von einer verbindungsindividuellen Schalteinrichtung zu einer anderen verbindungsindividuellen Schalteinrichtung Informationen zur Weitergabe von Schaltkennzeichen übertragen werden, werden also zugleich mit diesen Informationen die der Meldung der Veränderung der Leistungsfähigkeit des zentralen Schaltwerkes dienenden Daten von einer verbindungsindividuellen Schalteinrichtung zu der betreffenden anderen verbindungsindividuellen Schalteinrichtung übermittelt.

Die die Leistungsfähigkeit des zentralen Schaltwerks betreffenden Daten, die nach Eintreffen in einem dezentralen Schaltwerk zusammen mit verbindungsindividuell von diesem dezentralen Schaltwerk zu wenigstens einem anderen dezentralen Schaltwerk zu übertragenden Informationen weitergeleitet werden, können auch anstatt mit Transit-Informationen repräsentierenden Schaltkennzeicheninformationen vielmehr auch mit einer solchen Nachricht übertragen werden, die eine in der dem ersteren dezentralen Schaltwerk zugeordneten verbindungsindividuellen Schalteinrichtung erfolgte endgültige Verbindungsdurchschaltung der dem letzteren dezentralen Schaltwerk zugeordneten weiteren verbindungsindividuellen Schalteinrichtung meldet. Demgemäß ist also vorgesehen, daß die der Meldung der Veränderung des Prozentsatzes dienenden Daten zusammen mit einer verbindungsindividuellen, einer Signalisierung einer Vervollständigung der Verbindungsdurchschaltung in einer dem einen dezentralen Schaltwerk zugeordneten verbindungsindividuellen Schalteinrichtung dienenden Nachricht von diesem dezentralen Schaltwerk zu dem der betreffenden anderen verbindungsindividuellen Schalteinrichtung entsprechenden dezentralen Schaltwerk übertragen werden. Da diese Nachricht zu einem bezüglich des weiteren Verbindungsaufbaues relativ frühen Zeitpunkt übertragen wird, werden die die Leistungsfähigkeit des zentralen Schaltwerkes meldenden Daten ebenfalls zu relativ frühem Zeitpunkt weitergeleitet.

**Patentansprüche**

1. Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit eninem zentralen Koppelfeld (K) und mit dezentralen Anschlußgruppen (LTG), denen jeweils ein dezentrales Schaltwerk zugeordnet ist, und an die Teilnehmeranschlußleitungen, Verbindungsleitungen, zum Beispiel Orts- und Fernverbindungsleitungen, und verbindungsindividuelle Schalteinrichtungen, zum Beispiel Verbindungssätze und Wahlempfangseinrichtungen, angeschlossen sind, und die mit dem zentralen Schaltwerk in einem der Abwicklung der einzelnen Vermittlungsvorgänge dienenden Austausch von Daten, zum Beispiel von Wahlinformationen und Steuer- und Einstellinformationen, stehen, und mit Meßeinrichtungen zur Bestimmung eines Abweichens der akuten Informationsverarbeitungs-Arbeitsbelastung eines zentralen Schaltwerkes von seiner Leistungsfähigkeit, insbesondere zur Erkennung von Informationsverarbeitungs-Verkehrsüberlastungen und zur Abwehr solcher Überlastungen, und mit den dezentralen Anschlußgruppen zugeordneten Abweiseinrichtungen, in denen die Menge der einfallenden Informationsverarbeitungs-Aufträge reduziert wird, indem ein bestimmter Prozentsätz dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks zu den dezentralen Schaltwerken, in denen der Prozentsatz gespeichert ist und in denen für die Speicherung dieses Prozentsatzes vorgesehene Speicherschaltmittel bei Eintreffen von eine Erhöhung bzw. Herabsetzung meldenden Daten schrittweise den gespeicherten Prozentsatz verringern bzw. vergrößern, wobei die der Meldung der Erhöhung bzw. Herabsetzung dieses Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln übertragen werden, dadurch gekennzeichnet, daß die der Meldung der Veränderung des Prozentsatzes dienenden und jeweils vom zentralen Schaltwerk zu einem dezentralen Schaltwerk übertragenen Daten bei Herstellung von Verbindungen über das Koppelfeld (K) und über zwei der verbindungsindividuellen Schalteinrichtungen, die an verschiedene Anschlußgruppen angeschlossen sind, zusammen mit verbindungsindividuell und von verbindungsindividueller Schalteinrichtung zu verbindungsindividueller Schalteinrichtung zu übertragenden Schaltkennzeichen-Informationen, insbesondere Transit-Informationen, weitergeleitet und dadurch von dem letztgenannten dezentralen Schaltwerk zu den anderen dezentralen Schaltwerken übermittelt werden.

2. Schaltungsanordnung nach Anspruch 1, dadurch gekennzeichnet, daß die der Meldung der Veränderung des Prozentsatzes dienenden Daten zusammen mit einer verbindungsindividuellen, einer Signalisierung einer Vervollständigung der Verbindungsdurchschaltung in einer dem einen dezentralen Schaltwerk zugeordneten verbindungsindividuellen Schalteinrichtung dienenden Nachricht von diesem dezentralen Schaltwerk zu dem der betreffenden anderen verbindungsindividuellen Schalteinrichtung entsprechenden dezentralen Schaltwerk übertragen werden.

## Claims

1. Circuit arrangement for telecommunication exchanges, in particular telephone exchanges, with centralized and decentralized information-processing switching devices, which have a limited capability with regard to the information-processing capacity, and with a centralized switching matrix (K), and with decentralized line trunk groups (LTG), to which in each case a decentralized switching device is assigned, and to which subscriber lines, connecting lines, for example local and long-distance junction lines, and connection-individual switching facilities, for example connector sets and selection receiving facilities, are connected, and which conduct an exchange of data, for example of selection information and control and setting information, with the central switching device, this exchange serving the execution of the individual switching operations, and with measuring facilities for determining when there is a discrepancy between the acute information-processing workload of a centralized switching device and its capability, in particular for detecting information-processing traffic overloads and for averting such overloads, and with rejection facilities which are assigned to the decentralized line trunk groups and in which the quantity of information-processing orders occurring is reduced by a certain percentage of these orders being rejected, and with transfer switching means for the signalling of data on the discrepancy between the acute information-processing workload and the capability of a centralized switching device to the decentralized switching devices, in which the percentage is stored and in which memory switching means, provided for the storage of this percentage, reduce or increase the stored percentage step by step whenever data signalling an increase or decrease arrive, the data serving to signal the increase or decrease of this percentage being transferred from the centralized switching device to the decentralized switching devices and in the latter to the memory switching means, together with the data transferring the execution of the switching operations from the centralized switching device to the decentralized switching devices, in particular the setting and control information, characterized in that the data serving to signal the changing of the percentage and to transfer in each case from the centralized switching device to a decentralized switching device are passed on when connections are established via the switching matrix (K) and via two of the connection-individual switching facilities, which are connected to various line trunk groups, together with switching identifier information, in particular transit information, to be transferred connection-individually and from connection-individual switching facility to connection-individual switching facility and, thereby transmitted from the decentralized switching device just mentioned to the other decentralized switching devices.

2. Circuit arrangement according to Claim 1, characterized in that the data serving to signal the change of the percentage are transferred together with a connection-individual message, serving to signal a completion of the switching-through of the connection in a connection-individual switching facility assigned to a decentralized switching device, from the said decentralized switching device to the decentralized switching device corresponding to the other connection-individual switching facility concerned.

## Revendications

1. Montage pour des installations de télécommunications, notamment des centraux téléphoniques, comportant des unités centrales de commutation et des unités décentralisées de commutation, qui traitent les informations et possèdent une capacité potentielle limitée du point de vue du traitement des informations et un champ de couplage central (K) et des groupes décentralisés de raccordement (LTG), auxquels sont associées des unités décentralisées de commutation respectives et auxquelles sont raccordés des lignes d'abonnés, des lignes de jonction, par exemple des lignes urbaines et des lignes interurbaines, et des dispositifs de commutation prévus pour chaque liaison, par exemple des jeux d'organes de jonction et des dispositifs de réception de sélection, et qui sont reliés à l'unité centrale de commutation pour exécuter un échange de données, par exemple d'informations de sélection et d'informations de commande et de réglage, qui sert pour le déroulement des différents processus de commutation, et des dispositifs de mesure servant à déterminer la différence entre la charge précise en travaux de traitement d'informations d'une unité centrale de commutation et sa capacité potentielle, notamment pour l'identification de surcharges en trafic de traitement d'informations et pour la lutte contre de telles surcharges, et des dispositifs de rejet, qui sont associés aux groupes décentralisés de raccordement et dans lesquels la quantité des ordres arrivants de traitement d'informations est réduite, par le fait qu'un pourcentage déterminé de ces ordres est rejeté, et des moyens de commutation de transmission servant à transmettre des données concernant la différence entre la charge réelle en travaux de traitement d'informations et la capacité potentielle d'une unité centrale de commutation aux unités décentralisées de commutation, dans lesquelles le pourcentage est mémorisé et dans lesquelles des moyens de commutation de mémoire, prevus pour la mémorisation de ce pourcentage, réduisent ou augmentent, pas-à-pas, le pourcentage mémorisé, lors de l'arrivée de données signalant un accroissement ou une réduction, auquel cas les données servant à transmettre et signaler l'accroissement ou la réduction de ce pourcentage sont transmises, en commun avec les donnees transmises lors du déroulement des processus de commutation de l'unité centrale de commutation aux unités décentralisées de commutation, notamment les informations de réglage et de commande, depuis l'unité centrale de commutation en direction des unités décentralisées de commutation et, dans ces dernières, aux moyens de commutation de mémoire, caractérisé par le fait que lors de l'établissement de liaisons par l'intermédiaire du champ de couplage (K) et par l'intermédiaire de deux dispositifs de commutation, qui sont prévus individuellement pour des liaisons et sont raccordés à différents groupes de raccordement, les données qui servent à signaler la modification du pourcentage et sont transmises respectivement par l'unité centrale de commutation à une unité décentralisée de commutation, sont retransmises, conjointement avec des informations indicatives de commutation, notamment des informations de transit, devant être transmises pour chaque liaison, depuis un dispositif de commutation, prévu individuellement pour une liaison, à un dispositif de commutation, prévu individuellement pour une liaison, et sont, de ce fait, transférées de l'unité décentralisée de commutation, indiquée en dernier lieu aux autres unités décentralisées de commutation.

2. Montage suivant la revendication 1, caractérisé par le fait que les données utilisées pour la signalisation de la modification du pourcentage sont transmises, conjointement avec une information, qui est prévue pour chaque liaison et sert à signaler l'achèvement de l'interconnexion de la liaison dans un dispositif de commutation prévu pour une liaison individuelle et associée à une unité décentralisée de commutation, depuis cette unité décentralisée de commutation en direction de l'unité décentralisée de commutation, qui correspond à l'autre dispositif respectif de commutation, prévu individuellement pour une liaison.

EP 0 171 784 B1

1